# EUROPEAN PATENT APPLICATION

(11) **EP 1 530 922 A1**
(43) Date of publication of application: **18.05.2005**
(21) Application number: 04105690.4
(22) Date of filing: 11.11.2004
(51) Int. Cl.: A47B 13/06, F16B 12/40, F16B 12/52

(54) **Connection and attachment fixture for elements of a modular structure, and corresponding construction method**

(30) Priority: 12.11.2003 IT UD20030222
(71) Applicant: Odorico, Angelo, 33050 Rivignano (Udine) (IT); Odorico, Marco, 33050 Rivignano (UD) (IT)
(72) Inventor: Odorico, Angelo, 33050 Rivignano (Udine) (IT); Odorico, Marco, 33050 Rivignano (UD) (IT)
(74) Representative: Petraz, Gilberto Luigi

(57) **Abstract**

Connection and attachment fixture between a first (11) and a second (12) element of a modular structure. The fixture comprises at least an attachment fin (13) made in a single piece from an outer surface (15, 16) of the first element (11), and directed, when in use, towards the outside of said element. Connection members (19) are provided on the fin which cooperate with one end (22) of the second element (12), in order to determine the attachment between the two.

## Description

### FIELD OF THE INVENTION

The present invention concerns a connection and attachment fixture for elements of a modular structure, for example an upright and a cross-piece or bar of a piece of furniture or a structural frame in general. The invention also concerns the construction method to achieve such fixture.

The invention is applied particularly, but not exclusively, to metal frames for tables or furniture for industrial kitchens, shelving, workbenches, desks, or other similar or comparable structural element.

### BACKGROUND OF THE INVENTION

It is known that in order to connect two elements of a structure to each other at an angle, for example an upright and a cross-piece of a table or shelving, auxiliary equipment is normally used, consisting of various elements such as brackets, bushings, inserts, rivets or others.

Such known solutions are costly, however, both in terms of assembly times, and also in terms of production and maintenance in the storeroom of the various assembly elements; moreover, the stable hold of the connection cannot be guaranteed over time.

Another solution provides that the elements to be connected are welded together, but apart from entailing onerous additional working, also entails problems of bulk, particularly in transport and storing the components of the furniture.

An assembly solution as suggested in DE-A-19920427 provides to obtain two slots, parallel and spaced between each other, on an upright; inside the slots two fins are inserted that are obtained as an extension of one end of a cross-piece. A hole is provided on the fins. An anchor screw is inserted into the cavity of the upright, passed through and clamped into the fin holes, in order to clamp the cross-piece to the upright.

This solution involves some assembly difficulties due to the fact that it is necessary to operate inside the upright cavity; furthermore, it does not enable to achieve a connection of two cross-pieces on two adjacent walls of the upright, since it does not leave enough space for the related fins and anchor screws.

One purpose of the present invention is to produce a connection and attachment fixture for the elements of a modular structure which is simple and economical to make, and which can be assembled rapidly and easily.

Another purpose of the present invention is to achieve a fixture which does not require auxiliary pieces or components which entail the need to manage spare parts.

The Applicants have devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with the above-mentioned purposes, a connection and attachment fixture according to the present invention is used to connect together at least two elements of a modular structure, for example the frame of a table, a shelving, a work bench or suchlike.

The fixture comprises an attachment fin, made in a piece determine the attachment of the two.

In a preferential form of embodiment, the fixture also comprises an extension for positioning and centering purposes, made in a piece on the end of the second element, and able to cooperate with a mating seating made on the outer surface of the first element, so as to allow to preposition and center the two elements.

According to a first embodiment, the connection means provided on the attachment fin comprise a threaded bushing, or other similar or comparable assembly element, which allows, in cooperation with a mating screw, bolt or suchlike, to clamp the first element to the second element. According to a variant, the connection means comprise a smooth hole able to cooperate with a self-threading screw.

If the two elements are tubular with relative axial compartments, the fin is made by sectioning, according to a desired profile, the outer surface of the first element, and bending the sectioned part towards the outside, so as to define a supporting base lying on a plane substantially perpendicular to the outer surface of the first element.

The two elements are assembled as follows: first the attachment fin protruding towards the outside is inserted inside the axial compartment of the second element, substantially adhering to its inner wall; then an attachment element, such as a screw, whether self-threading or not, a bolt or suchlike, is inserted through a hole, circular or slotted, present on the lateral surface of the second element, near one end thereof, and inside such bushing, hole or suchlike.

The fixture according to the present invention therefore consists almost entirely of elements made in a piece with the elements to be connected. Such solution allows almost to eliminate the need for spare parts, which are limited to simple and common hardware elements.

Moreover, the assembly operations are performed simply and quickly, without requiring specialized labor, and a stable hold, constant over time, is guaranteed.

### BRIEF DESCRIPTION OF THE DRAWINGS

These and other characteristics of the present invention will become apparent from the following description of a preferential form of embodiment, given as a non-restrictive example with reference to the attached drawings wherein:
- - fig. 1: is an exploded perspective view of a connection and attachment fixture according to the present invention;
- - fig. 2: is a perspective view of the fixture in fig. 1 in its assembled condition;
- - fig. 2a: shows an enlarged detail of fig. 2;
- - fig. 3: is a perspective view of a first step in the construction method to achieve the fixture in fig. 1;
- - fig. 4: is a perspective view of a second step in the construction method to achieve the fixture in fig. 1;
- - fig. 5: is a perspective view of a third step in the construction method to achieve the fixture in fig. 1;
- - fig. 6: is a perspective view of a fourth step in the construction method to achieve the fixture in fig. 1;
- - fig. 7: is a perspective view of a fifth step in the construction method to achieve the fixture in fig. 1.

### DETAILED DESCRIPTION OF A PREFERENTIAL FORM OF EMBODIMENT

With reference to the attached drawings, a connection and attachment fixture 10 according to the present invention is used to connect a first and a second element, in this case an upright 11 and a cross-piece 12 of the frame of a table. It comes within the scope of the present invention that the fixture 10 can be applied for any elements of modular structures that have to be connected together at an angle.

The upright 11 and the cross-piece 12 are advantageously metal tubular elements that have respective axial compartments 11a and 12a and, in this case, have a substantially square cross section, equal to each other. However, it comes within the scope of the invention that the tubular elements can have any shape section, for example circular, polygonal, oval or otherwise, and any thickness and/or size.

The upright 11 comprises in this case two attachment fins 13 made in a piece by sectioning from its respective outer surfaces 15 and 16, in this case adjacent. To be more exact, the sectioning is performed in this case on three sides of the fin 13, while one side, in this case, the lower one, is only weakened along a line 26 which has micro-joints, for example obtained by laser cutting, in order to facilitate the subsequent opening of the fin 13 by the final user too.

Each of the attachment fins 13 is folded towards the outside so as to define a base arranged on a plane substantially perpendicular to the respective outer surface 15, 16; during the assembly of the two elements 11 and 12, the fin 13 is inserted inside the axial compartment 12a of the cross-piece 12, substantially adhering to its inner wall, in order to determine the attachment of the upright 11 and the cross-piece 12 as will be explained hereafter.

Each fin 13 also has a through hole 17 into which, in the case shown here, a threaded bushing 19 is inserted. It comes within the scope of the invention that, instead of the threaded bushing 19, a simple smooth hole is made and self-threading screws are used for the connection.

On every outer surface 15, 16, above the respective fin 13, a slit 20 is also made, arranged substantially horizontal in the figures, and including a first segment 20a with a first transverse size and a second segment 20b arranged adjacent and above the first segment 20a, having a second transverse size smaller than the first.

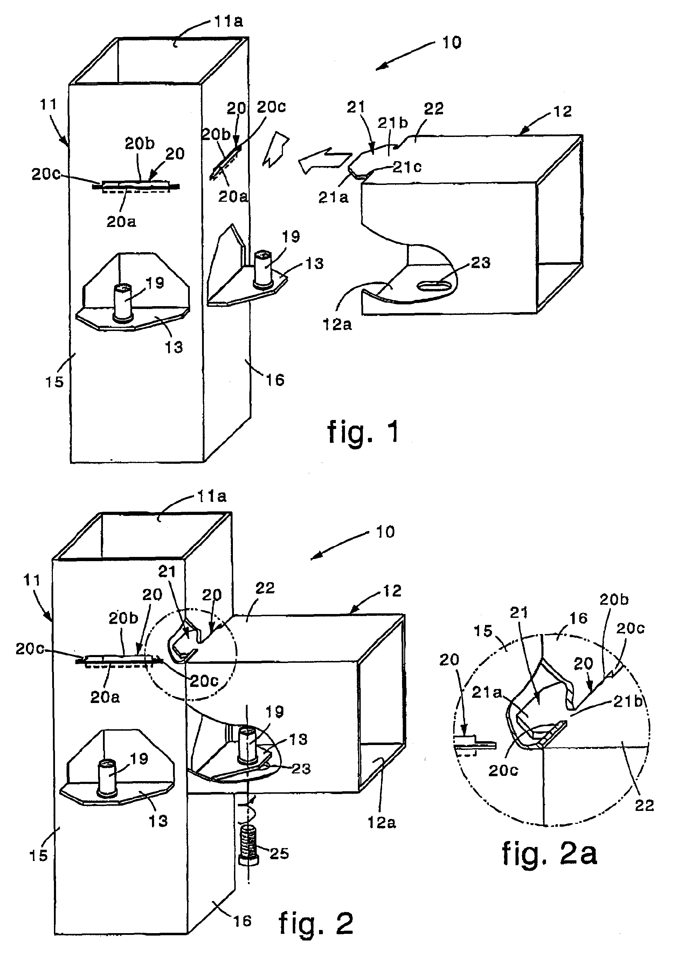

It comes within the scope of the invention that the second segment 20b, as indicated by dashes in figs. 1 and 2, is arranged below the first segment 20a, or that there is a second segment above and a second segment below the first segment 20a, in order to facilitate the passage of possible thicker parts deriving from the welding and present in the tubular element 12 at the moment of coupling.

The two segments 20a and 20b define two lateral abutment shoulders 20c.

The cross-piece 12 comprises, at one end 22, a positioning extension consisting of a tongue 21 protruding and made in one piece therewith, able to be inserted inside the respective slit 20, in order to reciprocally position the upright 11 and the cross-piece 12 and allow the centered coupling thereof.

The tongue 21 is shaped so as to have a front segment 21a with a transverse size mating with that of the first segment 20a of the slit 20, and a rear segment 21b with a transverse size mating with that of the second segment 20b of the slit 20. This conformation defines two stop recesses 21c between the two segments 21a and 21b.

The shaped tongue 21 is inserted inside the slit 20 making its front segment 21a pass through the first segment 20a, and is then displaced vertically, so that its rear segment 21b engages with the second segment 20b, and the stop recesses 21c cooperate with the abutment shoulders 20c (fig. 2a), in order to prevent the tongue 21 from accidentally slipping out of the respective slit 20.

The cross-piece 12 also comprises, near the end 22 but on the opposite side with respect to the tongue 21, a slot or hole 23 able during use to be arranged below and aligned with the through hole 17 of the respective attachment fin 13; through such slot 23 a screw 25 can be inserted, or a bolt, which, screwed to the threaded bushing 19, or self-threading into a hole, determines the attachment of the upright 11 and cross-piece 12.

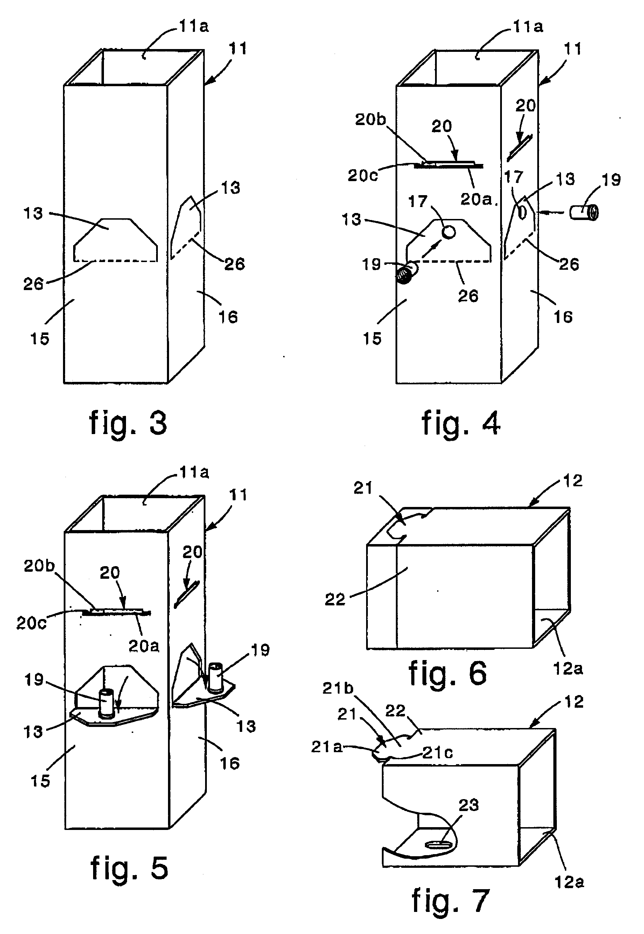

As shown in figs. 3-7, the construction method to achieve the connection and attachment fixture 10 according to the invention provides the following steps. First the attachment fins 13 are sectioned, with the desired profile, from the respective outer surfaces 15 and 16, by means of known cutting techniques, such as for example laser rays, shearing, or otherwise, but leaving at least said segment 26 of the perimeter of such fins 13 micro-joined to the respective outer surfaces 15 and 16.

Then, in a second step (fig. 4), the hole 17 is made in the fin 13 inside which, in the case shown here, the threaded bushing 19 is inserted.

The presence of the micro-joined segment 26, in a third step (fig. 5), allows to bend the fin 13, thus cut, towards the outside, so that the latter, already equipped with the hole 17 and/or the bushing 19, can be arranged on a plane substantially perpendicular to the respective outer surface 15, 16. The bending of the fins 13 can also be done by the final user, so that during the steps to transport and store the tubular element 11 in the dismantled condition there are no protruding parts that increase the bulk and can cause cuts to the packaging, damage to adjacent pieces and small accidents.

In a subsequent step, or simultaneous with one or more of the previous steps, the slits 20 are made, for example using the same technique as that used to section the fin 13. Simultaneously with, or subsequently to, the aforesaid steps the tongue 21 is made, by means of a shaped profiling of the end 22 of the cross-piece 12, for example achieved by means of the technique of cutting with laser ray. Subsequently the slot 23 is made in a suitable way.

It is clear, however, that modifications and/or additions of parts may be made to the fixture 10 as described heretofore, without departing from the scope of the present invention.

For example, attachment fins 13 may be provided made in a piece on every outer surface of the upright 11, or various attachment fins 13 may be provided arranged at various heights on every outer surface of the upright 11, in order to couple several cross-pieces positioned above the same upright.

It comes within the scope of the present invention to provide that, instead of the threaded bushing 19, slot 23 and screw 25, other clamping means may be provided, for example of the snap-in, elastic, conical, friction type or others. It also comes within the scope of the invention to provide that the attachment fin 13 is made in a piece on the cross-piece 12, while the tongue 21 is made on the upright 11. In the event that the cross-piece 12 is not tubular, it comes within the scope of the invention to make thereon a seating for the attachment fin 13.

## Claims

1. Connection and attachment fixture between a first (11) and a second (12) element of a modular structure, **characterized in that** it comprises at least an attachment fin (13) made in a single piece from an outer surface (15, 16) of said first element (11), and directed, when in use, towards the outside of said first element (11), and on which connection means (19) are provided able to cooperate with one end (22) of said second element (12), in order to determine the attachment between the two.

2. Fixture as in claim 1, **characterized in that** it comprises a positioning and centering extension (21) made in a piece on said end (22) of said second element (12), and able to cooperate with a mating housing seating (20) made on said outer surface (15, 16) of said first element (11) in a position adjacent to said attachment fin (13).

3. Fixture as in claim 2, **characterized in that** said housing seating comprises a slit (20) having a first segment (20a) with a first transverse size, and a second segment (20b), arranged adjacent to said first segment (20a), and having a second transverse size smaller than said first transverse size, said two segments (20a, 20b) defining two lateral abutment shoulders (20c).

4. Fixture as in claim 1, **characterized in that** said connection means comprise at least a threaded bushing (19) applied in a hole (17) provided on said attachment fin (13), said bushing (19) cooperating with attachment means (25) of the screw or bolt type or suchlike, in order to clamp said first element (11) to said second element (12).

5. Fixture as in claim 1, **characterized in that** said connection means comprise a hole able to cooperate with a screw of the self-threading type.

6. Fixture as in any claim hereinbefore, wherein said two elements (11, 12) are tubular and define respective axial compartments (11a, 12a), **characterized in that** said attachment fin (13) is arranged on a plane substantially perpendicular to said outer surface (15, 16) of said first element (11), and is able to be inserted inside the axial compartment (12a) of said second element (12) substantially adhering to its inner wall.

7. Fixture as in any claim from 2 to 6 inclusive, **characterized in that** said positioning and centering extension comprises a shaped tongue (21) protruding from the end of said second element (12), and comprising a front segment (21a) with a transverse size mating with that of said first segment (20a) of said slit (20), and a rear segment (21b) with a transverse size mating with that of said second segment (20b) of said slit (20), said two segments (21a, 21b) defining two stop recesses (21c) able to cooperate with said two lateral abutment shoulders (20c) in order to prevent said tongue (21) from accidentally emerging from said slit (20).

8. Fixture as in claim 4 or 5, **characterized in that** said second element (12) comprises, on one lateral surface near its end, at least a slot or through hole (23) able to allow said screw element (25) to pass and be inserted inside said threaded bushing (19) or hole.

9. Construction method to achieve a connection and attachment fixture between a first (11) and a second (12) element of a modular structure, **characterized in that** it comprises:
- a first step wherein at least an attachment fin (13) is made in a piece by sectioning from an outer surface (15, 16) of said first element (11), leaving at least a segment (26) of the perimeter of said attachment fin (13) connected by means of micro-joints to said outer surface (15, 16); and
- a second step wherein said attachment fin (13) is bent towards the outside of said first element (11), so as to be arranged on a plane substantially perpendicular to said outer surface (15, 16).

10. Construction method as in claim 9, **characterized in that** it comprises a step wherein on said attachment fin (13) connection means (19) are applied able to allow the attachment of said first element (11) to said second element (12).
